# EUROPÄISCHE PATENTSCHRIFT

(11) **EP 0 793 822 B1**
(45) Veröffentlichungstag und Bekanntmachung des Hinweises auf die Patenterteilung: **13.05.1998**
(21) Anmeldenummer: 95938444.7
(22) Anmeldetag: 14.11.1995
(51) Int. Cl.: G05D 23/19, G05D 23/24, F24F 11/00, F24F 11/04, G05B 13/02

(54) **VERFAHREN ZUR REGELUNG DER RAUMTEMPERATUR UNTER VERWENDUNG EINES KLIMAGERÄTES MIT STUFENWEISE GESCHALTETEM VENTILATOR**
PROCESS FOR REGULATING ROOM TEMPERATURE BY USING AN AIR CONDITIONING APPARATUS WITH A VENTILATOR SWITCHED STEP-BY-STEP
PROCEDE DE REGULATION DE LA TEMPERATURE AMBIANTE AU MOYEN D'UN APPAREIL DE CLIMATISATION AVEC UN VENTILATEUR COMMUTE PAR PALIERS

(30) Priorität: 22.11.1994 DE 4441494
(43) Veröffentlichungstag der Anmeldung: 10.09.1997
(73) Patentinhaber: HOVAL INTERLIZ AG, FL-9490 Vaduz-Neugut (LI)
(72) Erfinder: AMMANN, Josef, FL-9494 Schaan (LI)
(74) Vertreter: Hosbach, Hans Ulrich
(86) Internationale Anmeldenummer: EP9504468
(87) Internationale Veröffentlichungsnummer: WO9616363

(56) Entgegenhaltungen:
- EP-A- 0 518 322
- DE-A- 2 365 506
- DE-A- 2 507 760
- DE-A- 4 113 374

## Beschreibung

Die Erfindung betrifft ein Verfahren zur Regelung der Raumtemperatur unter Verwendung eines wenigstens einen Ventilator aufweisenden Umluftklimageräts, wobei ein Temperatur-Istwert gemessen und mit einem Temperatur-Sollwert zur Bildung einer Regelabweichung verglichen und die Drehzahl des Ventilators in Abhängigkeit von der Regelabweichung in wenigstens zwei Stufen geschaltet wird. Außerdem betrifft die Erfindung eine Regelanordnung nach dem Oberbegriff des Patentanspruchs 11 zur Durchführung dieses Verfahrens.

Eine Regelanordnung der gattungsgemäßen Art ist bekannt aus der DE-A-41 13 374. Diese bekannte Klimaanlage dient zur Klimatisierung von Fahrzeugzellen und regelt die Stärke des eingeblasenen Luftstroms in Abhängigkeit von der Haut temperatur einer in der Zelle befindlichen Person. Zusätzlich zur Hauttemperatur werden folgende Meßgrößen erfaßt und als Regelungsparameter berücksichtigt: Die Änderungsgeschwindigkeit der Hauttemperatur; die Umgebungslufttemperatur; die Sonneneinstrahlung; die Schalttafeleinstellungen; die Raumtemperatur; und die Luftmischklappenstellung. Der meß- und regelungstechnische Aufwand ist bei dieser bekannten Klimaanlage erheblich.

Aus der EP-A-0 518 322 ist eine Regelungsanordnung für eine Klimaanlage bekannt, die aus zwei hintereinander geschalteten Reglereinheiten besteht. Die erste Reglereinheit regelt einen Temperatur-Sollwert der vom Klimagerät abgegebene Luft; die zweite Reglereinheit regelt den Lüftungsschieber und Heizelemente in Abhängigkeit von der Temperatur der von dem Klimagerät abgegebenen Luft.

Herkömmliche Klimageräte der gattungsgemäßen Art regeln die Raumtemperatur auf eine der drei folgenden Arten: 1.) Die Temperatur der umgewälzten Luft wird stetig geregelt. 2.) Die Strömungsgeschwindigkeit der umgewälzten Luft wird über die Drehzahl des Ventilators stetig geregelt. 3.) Die Strömungsgeschwindigkeit der umgewälzten Luft wird stufenweise über die Drehzahl des Ventilators geregelt.

Die Gestehungskosten von Regelanordnungen der beiden stetigen Regelungsarten sind relativ hoch. Demgegenüber ist die dritte Regelungsart kostengünstiger zu realisieren und wird deshalb in der Praxis bevorzugt eingesetzt. Diese Art der Regelung bildet die gattungsmäßige Ausgangslage für die vorliegende Erfindung.

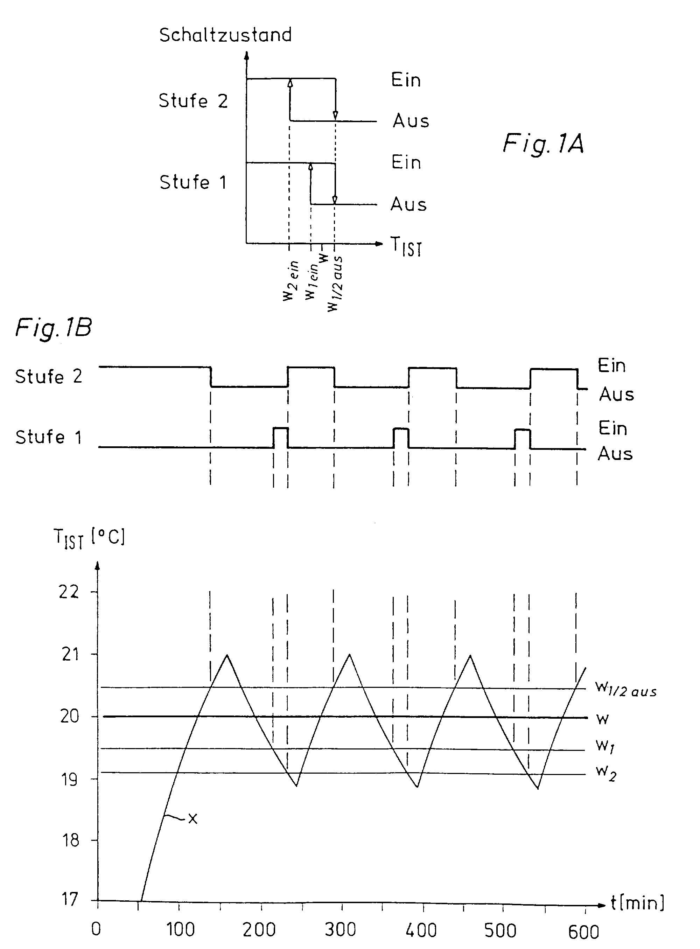

Die nicht stetige Regelung bekannter Art wird anhand der Diagramme in den Fig. 1A und 1B nachfolgend erläutert.

Ziel dieser Regelung ist es, die zu regelnde Temperatur möglichst nahe des Sollwerts w in Fig. 1B einzustellen. Bei einer unstetigen Mehrpunktregelung kann dies nur durch Regelausschläge auf beiden Seiten des Sollwerts erfolgen. Die Drehzahl des Ventilators kann in zwei Stufen geschaltet werden; die erste Stufe ist leistungsschwach, und die zweite Stufe ist leistungsstark. Bei der bekannten Regelanordnung werden beide Drehzahlstufen nur in Abhängigkeit von vorgegebenen Schwellwerten des Temperatur-Istwertes geschaltet. Die zweite, leistungsstarke Drehzahlstufe wird immer dann eingeschaltet, wenn ein Schwellwert (w₂ₑᵢₙ) des Temperatur-Istwertes unterschritten wird, was einer relativ großen Regelabweichung entspricht. Zur Vermeidung häufiger Schaltvorgänge und Betätigungen sowohl der Drehzahlstufe 1 als auch der Drehzahlstufe 2 hat man bisher größere Regelabweichungen zugelassen. Die Folge waren spürbare Raumtemperaturschwankungen, wie sie in Fig. 1B oberhalb und unterhalb des Sollwerts w zu erkennen sind. Die Aus- und Einschaltung der Stufe 1 bei den Schwellwerten w₁ₐᵤₛ und w₁ₑᵢₙ beeinflußt das Regelverhalten der Temperaturkurve x gem. Fig. 1B nur wenig. Zur Richtungsumkehr eines abfallenden Temperatur-Istwertverlaufes bedarf es einer Ein- und Ausschaltung der Stufe 2 bei w₂ₑᵢₙ und w₂ₐᵤₛ. Auf die Schaltung in Stufe 2 reagiert der Temperatur-Istwert relativ rasch, steigt an und nähert sich und überschreitet den Sollwert w.

Die Schaltabstände sind zwar bei dieser Regelung ausreichend groß gewählt, um eine übermäßige Geräuschbelästigung zu vermeiden; andererseits sind aber spürbare Raumtemperaturschwankungen mit dieser bekannten Regelung unvermeidbar.

Der Erfindung liegt daher die Aufgabe zugrunde, den Benutzerkomfort bei Verwendung der nicht-stetigen Regelungsart zu verbessern.

Diese Aufgabe wird verfahrensmäßig dadurch gelöst,
daß eine erste Drehzahlstufe eingeschaltet wird, wenn die Regelabweichung größer ist als ein erster Schwellwert und entweder konstant ist oder zunimmt;
daß die erste Drehzahlstufe ausgeschaltet wird, wenn die Regelabweichung abnimmt und ein zweiter Schwellwert unterschritten wird;
daß eine zweite Drehzahlstufe eingeschaltet wird, wenn die Regelabweichung größer ist als ein dritter Schwellwert und/oder wenn bei zunehmender oder konstanter Regelabweichung das Integral der Regelabweichung über die Zeit einen vorgegebenen Wert überschreitet;
daß die zweite Drehzahlstufe ausgeschaltet wird, wenn die Regelabweichung abnimmt und ein vierter Schwellwert unterschritten wird; und
daß der erste Schwellwert der Regelabweichung kleiner/gleich dem zweiten Schwellwert, der zweite Schwellwert kleiner/gleich dem vierten Schwellwert und der vierte Schwellwert kleiner/gleich dem dritten Schwellwert eingestellt wird.

Das erfindungsgemäße Verfahren läßt sich bei Umluftheizgeräten, Umluftkühlgeräten und Heiz- und Kühl-Kombinationsgeräten ausführen. Derartigen Geräten ist erfindungsgemäß eine Regelanordnung mit den Merkmalen des Anspruchs 11 zugeordnet.

Die Erfindung wendet sich ab von der Regelung einzig in Abhängigkeit von vorgegebenen Schwellwerten des Temperatur-Istwertes. Sie hat erkannt, daß diese Schwellwertregelung ursächlich ist für die starken und den Benutzerkomfort beeinträchtigenden Temperaturausschläge oberhalb und unterhalb der Solltemperatur. Eine relativ enge Annäherung an den Temperatursollwert bei gleichen oder sogar herabgesetzten Schalthäufigkeiten erreicht die Erfindung durch Einbeziehung von Temperaturtendenzen in die Entscheidungsbedingungen. Das Ein- und Ausschalten der beiden Drehzahlstufen wird aufgrund der Tendenz des Temperaturverlaufs bereits vorzeitig ausgelöst, wodurch der Totzeit des Systems Rechnung getragen und der Temperaturverlauf mit relativ geringen Abweichungen nahe dem Sollwert gehalten wird. Dies hat im normalen Betriebsverlauf den Vorteil, daß die besonders störende, da leistungsstarke zweite Drehzahlstufe nur in Extremfällen zum Einsatz kommt, so beispielsweise bei plötzlich geöffnetem Fenster eines beheizten Raums oder am Ende einer Nachtabsenkung und sprunghafter Erhöhung des Temperatursollwerts. Auch die Schalthäufigkeit ist auf ein Minimum beschränkt. Dadurch gelingt es, den Benutzerkomfort kostenaufwendiger stetiger Regelanordnungen auch bei nicht-stetigen Regelungen zu realisieren.

In Weiterbildung der Erfindung ist vorgesehen, daß die Integration der Regelabweichung über die Zeit abgebrochen, auf Null zurückgesetzt und erneut mit der Integration begonnen wird, sobald die erste und die zweite Drehzahlstufe ausgeschaltet werden. Dadurch wird nicht nur die Größe der Regelabweichung, sondern auch die Dauer einer Regelabweichung bei der Temperaturkorrektur berücksichtigt.

Um Regelabweichungen möglichst rasch und mit geringen Regelausschlägen abfangen zu können, ist in vorteilhafter Weiterbildung der Erfindung vorgesehen, daß der erste Schwellwert der Regelabweichung gleich Null eingestellt wird.

Um die Schalthäufigkeit selbst bei einer unruhigen Regelstrecke in Grenzen zu halten, ist bei einer Weiterbildung der Erfindung vorgesehen, daß die erste und/oder zweite Drehzahlstufe erst nach einer Mindestlaufzeit des Ventilators in der ersten und/oder der zweiten Drehzahlstufe ausgeschaltet wird. Die Mindestlaufzeit kann beispielsweise zwei bis sechs, vorzugsweise drei Takte betragen.

Im Nachtbetrieb kann die erste Drehzahlstufe ungeschaltet bleiben. Die zweite Drehzahlstufe wird dagegen gemäß einem Ausführungsbeispiel der Erfindung unter den Schaltbedingungen der ersten Drehzahlstufe geschaltet, während die Schaltbedingungen der zweiten Drehzahlstufe im Nachtbetrieb ignoriert werden.

Bei einem besonders bevorzugten Ausführungsbeispiel wird eine Fuzzy-Logik (Unschärfelogik) zum Schalten der Drehzahlstufen verwendet. Mit Hilfe der Fuzzy-Logik gelingt es, das Regelungsverhalten noch besser an benutzerspezifische Anforderungen anzupassen.

Vorzugsweise werden die Meß- und Regelsignale digital verarbeitet. Insbesondere in großen digitalen Regelsystemen, beispielsweise in Kaufhäusern mit zentral geregelten Klimageräten, kann durch das erfindungsgemäße Regelungsverfahren der Energieverbrauch deutlich gesenkt werden. Bestehende Regelarmaturen und komponenten können ohne großen technischen Aufwand mit der erfindungsgemäßen Regelanordnung ausgestattet und auf das erfindungsgemäße Verfahren umgestellt werden.

Vorteilhafte Weiterbildungen und Einzelheiten der Erfindung sind in den Unteransprüchen gekennzeichnet.

Im folgenden wird die Erfindung anhand eines in der Zeichnung dargestellten Ausführungsbeispiels näher erläutert. In der Zeichnung zeigen:
- Fig. 1A: die Schaltzustände des Ventilators bei dem bekannten nicht-stetigen Regelverfahren zur Regelung eines Ventilators in zwei Drehzahlstufen, aufgetragen gegen den Temperatur-Istwert;
- Fig. 1B: den Verlauf des Temperatur-Istwerts, aufgetragen gegen die Zeit, bei dem bekannten Regelverfahren gemäß Fig. 1A;
- Fig. 2: eine schematische Darstellung des prinzipiellen Aufbaus des Ausführungsbeispiels der erfindungsgemäßen Regelanordnung;
- Fig. 3: ein Diagramm der Schaltbedingungen des erfindungsgemäßen Regelverfahrens einerseits in Fuzzy-Logik und andererseits in Crisp-Logik; und
- Fig. 4: die Schaltzustände des Ventilators und den Verlauf des Temperatur-Istwertes, aufgetragen gegen die Zeit bei Verwendung der Regelanordnung gemäß Fig. 2.

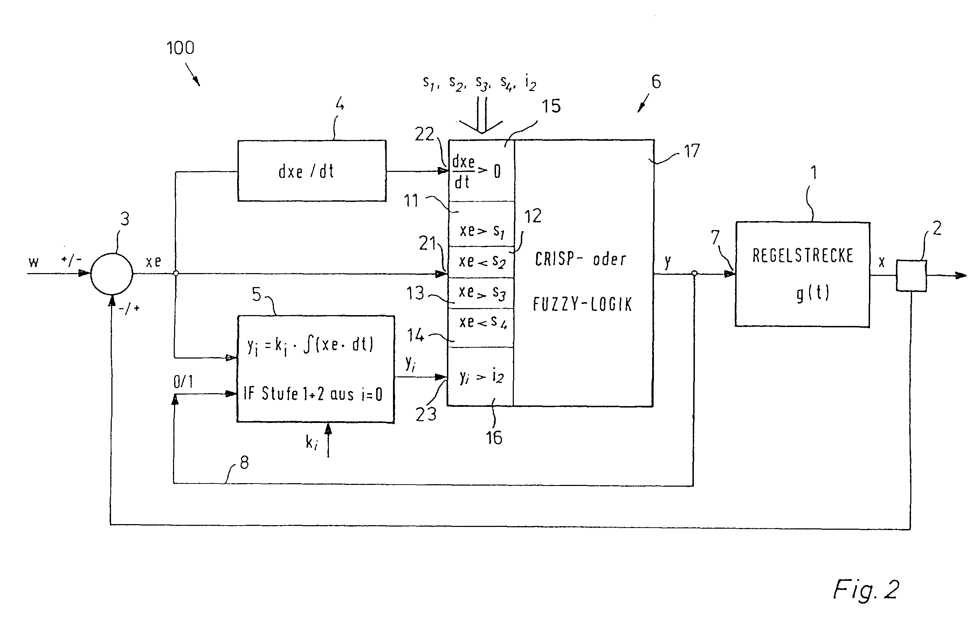

Fig. 2 zeigt schematisch die wesentlichen Komponenten und deren schaltungsmäßige Verknüpfung bei der erfindungsgemäßen Regelanordnung.

Die Regelanordnung 100 weist eine Regelstrecke 1 in Form eines in mehreren Leistungs- bzw. Drehzahlstufen schaltbaren Ventilators, ein Temperaturmeßgerät 2 mit Temperatursensor und Meßumformer, ein mit dem Meßgerät gekoppeltes Summierglied 3, das als Subtrahiereinrichtung ausgebildet ist, eine Differenziereinrichtung 4, eine Integriereinrichtung 5, einen Regler 6, ein vom Regler betätigtes Stellglied 7 am Eingang der Regelstrecke 1 und eine vom Ausgang des Reglers 6 zu einem Eingang der Integriereinrichtung 5 zurückgeführte Rückkopplungsschleife 8 auf.

Der Regler umfaßt bei dem beschriebenen Ausführungsbeispiel mehrere Vergleichseinrichtungen 11 bis 16 und eine die Vergleichsergebnisse berücksichtigende und danach ein Stellsignal y entwickelnde Entscheidungslogik 17, die entweder als Fuzzy-Logik oder als herkömmliche Crisp-Logik ausgebildet ist.

Der vom Meßgerät 2 erfaßte Temperatur-Istwert x kann beispielsweise in dem vom Klimagerät zu versorgenden Raum oder im Ansaugstrom des Ventilators abgegriffen werden. Man wird zweckmäßigerweise die Anordnung des Temperaturfühlers so wählen, daß die Totzeit zwischen Entstehen einer Regelabweichung und deren Korrektur durch Änderung des Stellsignals y möglichst gering ist.

Im Summierglied 3 wird der Temperatur-Istwert x mit dem eingestellten Temperatur-Sollwert xe verglichen. Die Differenz zwischen beiden ist die am Ausgang des Summierglieds 3 auftretende Regelabweichung xe. Diese Regelabweichung wird einerseits an das Differenzierglied 4, andererseits an einen Eingang des Reglers 6 und schließlich an einen Eingang des Integrierglieds 5 angelegt. Das Differenzierglied 4 bestimmt die zeitliche Änderung der Regelabweichung xe. Diese wird an einen ersten Eingang des Reglers 21 angelegt. Die über einen ersten Eingang des Integrierglieds 5 angelegte Regelabweichung xe wird dort über die Zeit integriert. Das Integrierglied 5 wird über die Rückkopplungsschleife 8 und über einen zweiten Eingang dann zurückgestellt, wenn beide Drehzahlstufen ausgeschaltet werden.

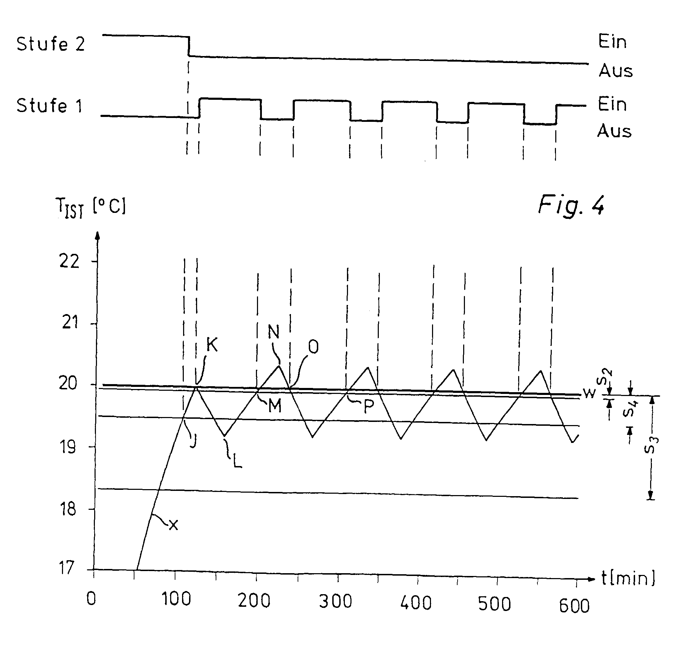

In den Regler 6 werden bei dem beschriebenen Ausführungsbeispiel vier Schwellwerte der Regelabweichung S₁, S₂, S₃ und S₄ und ein Integralgrenzwert i₂ eingegeben. Über die drei Reglereingänge 21, 22 und 23 erhält der Regler die der Regelabweichung, deren Ableitung und deren Integral entsprechenden variablen Signale. In den Vergleichern 11, 12, 13 und 14 wird die über den ersten Reglereingang 21 zugeführte Regelabweichung xe mit den vier Schwellwerten S₁, S₂, S₃ und S₄ verglichen, die in der Zeichnung in Fig. 4 mit Bezug auf den Temperatur-Sollwert dargestellt sind. Die zeitliche Änderung der Regelabweichung, d.h. dxe/dt, wird über den zweiten Eingang 22 einer fünften Vergleichsstufe 15 zugeführt und mit Null verglichen. Diese Vergleichsstufe 15 erzeugt ein Ausgangssignal, wenn die genannte Regelabweichungsänderung größer oder gleich Null ist. In der sechsten Vergleichsstufe 16 wird das über den dritten Reglereingang 23 zugeführte Integral in der Regelabweichung xe mit dem Grenzwert i₂ verglichen. Die Entscheidungslogik 17 bestimmt die Ein- und Ausschaltbedingungen sowohl der ersten Drehzahlstufe als auch der zweiten Drehzahlstufe nach den Ergebnissen in den sechs Vergleichseinrichtungen 11 bis 16.

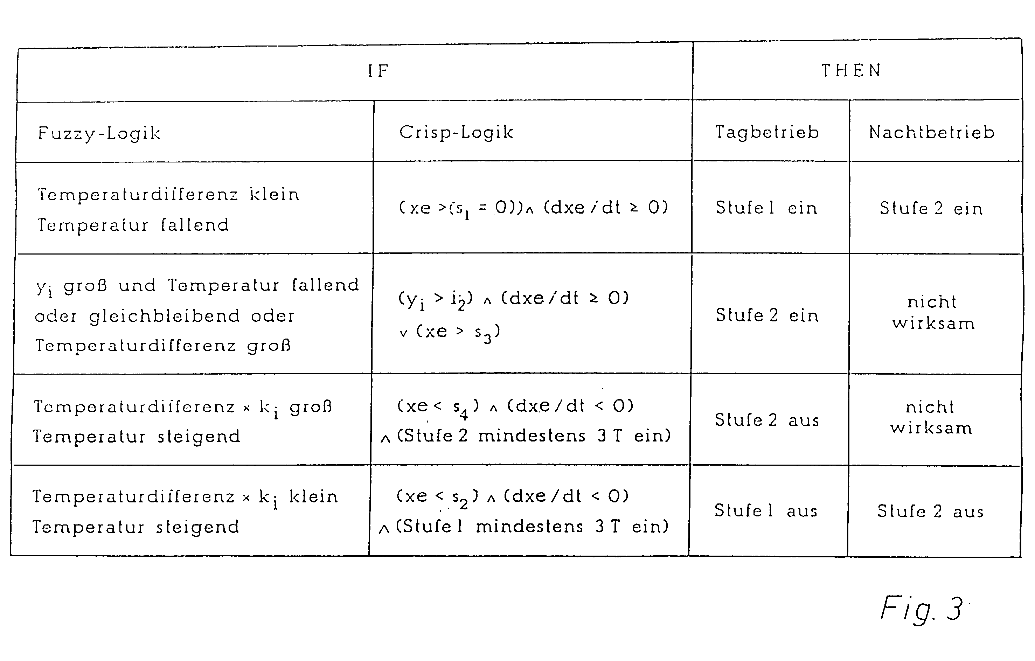

Fig. 3 zeigt ein Diagramm der Regelbasis für das beschriebene Ausführungsbeispiel. In der ersten Spalte sind die Ein- bzw. Ausschaltbedingungen in Fuzzy-Logik und in der zweiten Spalte die entsprechenden Bedingungen in Crisp-Logik eingetragen. Bei diesem Ausführungsbeispiel können die Stufen 1 und 2 nur dann ausgeschaltet werden, wenn sie mindestens drei Takte gelaufen sind. Außerdem unterscheidet sich die Regelung im Nachtbetrieb von der Regelung im Tagbetrieb. Im Nachtbetrieb wird die erste Drehzahlstufe nicht geschaltet. Die zweite Drehzahlstufe wird stattdessen unter den Schaltbedingungen der ersten Drehzahlstufe geschaltet. Die Schaltbedingungen der ersten Drehzahlstufe werden im Nachtbetrieb ignoriert. Dies hat den Vorteil, daß im Nachtbetrieb weniger geschaltet werden muß. Auch die Integriereinrichtung bleibt im Nachtbetrieb unwirksam.

Fig. 4 zeigt die Schaltzustände und den Verlauf des Temperatur-Istwertes aufgetragen gegen die Zeit, für eine die Regelbasis gemäß Fig. 3 verwendende Regelanordnung. Bei Einschalten des Heizgerätes liegt der Temperatur-Istwert deutlich unterhalb 17°C. Da die Regelabweichung xe größer als der dritte Schwellwert S₃ der Regelabweichung ist (festgestellt durch Vergleicher 13), ist der Wärmebedarf hoch und die zweite Drehzahlstufe eingeschaltet. In der zweiten Drehzahlstufe wird eine große Wärmemenge aus dem Heizgerät in den zu beheizenden Raum übertragen, wodurch der Temperatur-Istwert rasch ansteigt, bis die Regelabweichung den vierten Schwellwert S₄ der Regelabweichung am Punkt J unterschreitet (Vergleicher 14 in Fig. 2). Zu diesem Zeitpunkt ist die Bedingung für das Ausschalten der zweiten Drehzahlstufe erfüllt. Der Ventilator wird vollständig ausgeschaltet. Aufgrund der Totzeit des Systems steigt der Temperatur-Istwert vom Punkt I jedoch weiter bis zu dem Temperatur-Sollwert w an (Punkt K). Danach fällt der Temperatur-Istwert ab. Unmittelbar hinter dem Punkt K sind dann die Bedingungen für das Einschalten der ersten Drehzahlstufe erfüllt: Der Temperatur-Istwert unterschreitet den Temperatur-Sollwert (Vergleicher 11) und die Temperatur fällt (Vergleicher 15). In anderen Worten: Die Regelabweichung überschreitet den ersten Schwellwert S₁ der Regelabweichung, der in diesem Ausführungsbeispiel Null beträgt, und außerdem nimmt die Regelabweichung zu. Wegen der System-Totzeit fällt der Temperatur-Istwert zunächst trotz eingeschalteter erster Drehzahlstufe bis zu einem Minimum ab (Punkt L). Danach steigt die Temperatur unter Einfluß des in der ersten Drehzahlstufe laufenden Ventilators. Im Punkt M unterschreitet die Regelabweichung xe den zweiten Schwellwert S₂ der Regelabweichung, und die erste Drehzahlstufe wird ausgeschaltet. Die Temperatur steigt jedoch weiter über den Sollwert w an bis zu einem Maximum N und fällt danach wieder unter den Temperatur-Sollwert w (Punkt O), wobei der Ventilator erneut in die erste Drehzahlstufe eingeschaltet wird. Wenn der Temperatur-Istwert den Temperatur-Sollwert am Punkt P wieder erreicht hat, wird die erste Drehzahlstufe erneut ausgeschaltet usw..

Vergleicht man das Diagramm gemäß Fig. 4 (erfindungsgemäßes Regelungsverfahren) mit dem Digramm gemäß Figur 1B (bekanntes Regelungsverfahren), so wird deutlich, daß die Temperaturschwankung bei dem erfindungsgemäßen Verfahren um mehr als 50% reduziert ist. Dementsprechend verbessert ist der Benutzerkomfort infolge einer stabileren Raumtemperatur. Außerdem können beträchtliche Energiemengen mit dem Verfahren eingespart werden.

Ein weiterer Vorteil der erfindungsgemäßen Regelung ist, daß nur zu Beginn der Aufheizphase, d.h. wenn der Raum noch ausgekühlt ist, der Ventilator in der zweiten Drehzahlstufe läuft. Im Normalbetrieb genügt allein die erste Drehzahlstufe, um einen einmal erreichten Temperatur-Sollwert zu halten. Auf diese Weise können übermäßige und besonders störende Geräuschbelästigungen vom Benutzer ferngehalten werden.

In Weiterbildung der Erfindung sind viele Variationsmöglichkeiten denkbar. Die Schwellwerte der Regelabweichung können bei dem Verfahren fest vorgegeben werden oder in Abhängigkeit eines anlagenspezifischen Parameters (kᵢ) gewählt werden. Die Vergleichseinrichtungen können sowohl als Schmitt-Trigger ausgebildet sein. Genauso ist es aber möglich, stattdessen einen Analog/Digital-Wandler in Kombination mit einem Mikroprozessor vorzusehen, wobei alle Vergleiche im Mikroprozessor ausgeführt werden. Der Mikroprozessor kann auch alle Funktionen der Differenzier- und Integriereinrichtungen übernehmen. Das Regelungsverfahren kann auf beliebig viele Drehzahlstufen übertragen werden; insbesondere können mehrere Ventilatoren eingesetzt werden. Diese können ggf. gleichzeitig betrieben werden. Eine zweite Drehzahlstufe kann so z.B. durch zwei auf einer niedrigeren Drehzahlstufe laufende Ventilatoren realisiert werden.

## Patentansprüche

1. Verfahren zur Regelung der Raumtemperatur unter Verwendung eines wenigstens einen Ventilator aufweisenden Umluftklimageräts, wobei ein Temperatur-Istwert gemessen und mit einem Temperatur-Sollwert zur Bildung einer Regelabweichung verglichen und die Drehzahl des Ventilators in Abhängigkeit von der Regelabweichung in wenigstens zwei Stufen geschaltet wird,
**dadurch gekennzeichnet,**
daß eine erste Drehzahlstufe eingeschaltet wird, wenn die Regelabweichung größer ist als ein erster Schwellwert und entweder konstant ist oder zunimmt;
daß die erste Drehzahlstufe ausgeschaltet wird, wenn die Regelabweichung abnimmt und ein zweiter Schwellwert unterschritten wird;
daß eine zweite Drehzahlstufe eingeschaltet wird, wenn die Regelabweichung größer ist als ein dritter Schwellwert und/oder wenn bei zunehmender oder konstanter Regelabweichung das Integral der Regelabweichung über die Zeit einen vorgegebenen Wert überschreitet;
daß die zweite Drehzahlstufe ausgeschaltet wird, wenn die Regelabweichung abnimmt und ein vierter Schwellwert unterschritten wird; und
daß der erste Schwellwert der Regelabweichung kleiner/gleich dem zweiten Schwellwert, der zweite Schwellwert kleiner/gleich dem vierten Schwellwert und der vierte Schwellwert kleiner/gleich dem dritten Schwellwert eingestellt wird.

2. Verfahren nach Anspruch 1, dadurch gekennzeichnet, daß
die Regelabweichung beim Heizen durch Subtraktion des Temperatur-Istwertes von dem Temperatur-Sollwert und beim Kühlen durch Subtraktion des Temperatur-Sollwertes von dem Temperatur-Istwert bestimmt wird und daß die ersten bis vierten Schwellwerte der Regelabweichung größer/gleich Null eingestellt werden.

3. Verfahren nach Anspruch 1 oder 2, dadurch gekennzeichnet, daß die Integration der Regelabweichung über die Zeit abgebrochen, auf Null zurückgesetzt und erneut mit der Integration begonnen wird, sobald die erste und die zweite Drehzahlstufe ausgeschaltet werden.

4. Verfahren nach einem der Ansprüche 1 bis 3, dadurch gekennzeichnet, daß der erste Schwellwert der Regelabweichung gleich Null eingestellt wird.

5. Verfahren nach einem der Ansprüche 1 bis 4, dadurch gekennzeichnet, daß die erste und/oder zweite Drehzahlstufe nur ausgeschaltet wird, wenn der Ventilator eine Mindestzeitdauer in der ersten und/oder der zweiten Drehzahlstufe gelaufen ist.

6. Verfahren nach Anspruch 4 und 5, dadurch gekennzeichnet, daß die Mindestzeitdauer jeweils drei Takte beträgt.

7. Verfahren nach einem der Ansprüche 1 bis 6, dadurch gekennzeichnet, daß im Nachtbetrieb die erste Drehzahlstufe ungeschaltet bleibt, während die zweite Drehzahlstufe unter den Schaltbedingungen der ersten Drehzahlstufe geschaltet wird, und daß die Schaltbedingungen der zweiten Drehzahlstufe im Nachtbetrieb ignoriert werden.

8. Verfahren nach einem der Ansprüche 1 bis 7, dadurch gekennzeichnet, daß im Nachtbetrieb der Temperatur-Istwert um einen konstanten Wert gesenkt bzw. angehoben wird.

9. Verfahren nach einem der Ansprüche 1 bis 8, dadurch gekennzeichnet, daß ein eine Fuzzylogik enthaltender Regler zum Schalten der Drehzahlstufen verwendet wird.

10. Verfahren nach einem der Ansprüche 1 bis 8, dadurch gekennzeichnet, daß die Meß- und Regelsignale digital verarbeitet werden.

11. Regelanordnung (100) zur Regelung der Raumtemperatur,
mit einem wenigstens einen Ventilator aufweisenden Umluft-Klimagerät;
wenigstens einem Temperatursensor (2) zur Erfassung eines Temperatur-Istwerts;
wenigstens einem Stellglied zur Einstellung eines Temperatur-Sollwertes (w);
einem Summierglied (3) zur Bildung einer Regelabweichung (xe) zwischen dem Temperatur-Istwert und dem Temperatur-Sollwert;
einer Differenziereinrichtung (4) zur Bestimmung der zeitlichen Änderung der Regelabweichung; und
einer Entscheidungslogik (17) zum Schalten der Drehzahl des Ventilators,
**dadurch gekennzeichnet,**
daß vier Vergleichseinrichtungen (11...14) mit dem Summierglied (3) gekoppelt sind und die Regelabweichung jeweils mit einem von vier Schwellwerten der Regelabweichung vergleichen; und
daß eine fünfte Vergleichseinrichtung (15) mit der Differenziereinrichtung (4) gekoppelt ist und die zeitliche Änderung der Regelabweichung mit Null vergleicht,
wobei die Anordnung so getroffen ist, daß eine erste Drehzahlstufe eingeschaltet wird, wenn die Regelabweichung größer ist als ein erster Schwellwert und entweder konstant ist oder zunimmt;
daß die erste Drehzahlstufe ausgeschaltet wird, wenn die Regelabweichung abnimmt und ein zweiter Schwellwert unterschritten wird;
daß eine zweite Drehzahlstufe eingeschaltet wird, wenn die Regelabweichung größer ist als ein dritter Schwellwert und die zweite Drehzahlstufe ausgeschaltet wird, wenn die Regelabweichung abnimmt und ein vierter Schwellwert unterschritten wird; und
wobei der erste Schwellwert kleiner/gleich dem zweiten Schwellwert, der zweite Schwellwert kleiner/gleich dem vierten Schwellwert und der vierte Schwellwert kleiner/gleich dem dritten Schwellwert eingestellt ist.

12. Regelanordnung nach Anspruch 11, dadurch gekennzeichnet, daß außerdem eine Integriereinrichtung (5) zum Integrieren der Regelabweichung und eine der Integriereinrichtung (5) nachgeschaltete weitere Vergleichseinrichtung (16) vorgesehen sind, wobei letzere (16) das Integral der Regelabweichung über die Zeit mit einem vorgegebenen Wert vergleicht.

13. Regelanordnung nach Anspruch 11 oder 12, dadurch gekennzeichnet, daß die Entscheidungslogik (17) als Fuzzylogik ausgebildet ist.

## Claims

1. Method of controlling room temperature using a recirculating air conditioning device having at least one fan in which an actual temperature value is measured and compared with a desired temperature value to form a control deviation and the speed of rotation of the fan is switched in dependence on the control deviation in at least two steps,
characterised in that
a first rotational speed is switched on when the control deviation is larger than a first threshold value and is either constant or is increasing;
that the first rotational speed is switched off when the control deviation is decreasing and falls below a second threshold value;
that a second rotational speed is switched on when the control deviation is larger than a third threshold value and/or when the integral of the control deviation over time exceeds a predetermined value with the control deviation increasing or constant;
that the second rotational speed is switched off when the control deviation decreases and falls below a fourth threshold value; and
that the first threshold value of the control deviation is set to be smaller than or equal to the second threshold value, the second threshold value is set to be smaller than or equal to the fourth threshold value and the fourth threshold value is set to be smaller than or equal to the third threshold value.

2. Method as claimed in claim 1, characterised in that the control deviation when heating is determined by subtracting the actual temperature value from the desired temperature value and, when cooling, by subtraction of the desired temperature value from the actual temperature value and that the first to fourth threshold values of the control deviation are set to be greater than or equal to zero.

3. Method as claimed in claim 1 or 2, characterised in that the integration of the control deviation over time is interrupted and set to zero and the integration is recommenced as soon as the first and the second rotational speed steps are switched off.

4. Method as claimed in one of claims 1 to 3, characterised in that the first threshold value of the control deviation is set at zero.

5. Method as claimed in one of claims 1 to 4, characterised in that the first and/or second rotational speed step is only switched off when the fan has run for a minimum period of time at the first and/or second rotational speed.

6. Method as claimed in claims 4 and 5, characterised in that the minimum period of time is in each case three cycles.

7. Method as claimed in one of claims 1 to 6, characterised in that, in nightime operation, the first rotational speed step remains unswitched whilst the second rotational speed step is switched on the switching conditions of the first rotational speed step and that the switching conditions of the second rotational speed step are ignored in nightime operation.

8. Method as claimed in one of claims 1 to 7, characterised in that the actual temperature value is reduced or increased by a constant value in nightime operation.

9. Method as claimed in one of claims 1 to 8, characteried in that a controller including a fuzzy logic device is used for switching the rotational speeds.

10. Method as claimed in one of claims 1 to 8, characterised in that the measurement and control signals are processed digitally.

11. Control apparatus (100) for controlling room temperature including
a recirculating air conditioning device with at least one fan;
at least one temperature sensor (2) for determining an actual temperature value;
at least one control element for adjusting a desired temperature value (w) ;
a summing element (3) for forming a control deviation (xe) between the actual temperature value and the desired temperature value;
a differentiating device (4) for determining the change of the control deviation with time; and
a decision logic device (17) for switching the rotational speed of the fan,
characterised in that
four comparators (11...14) are coupled to the summing element (3) and compare the control deviation with a respective one of four threshold values of the control deviation; and
that a fifth comparator (15) is coupled to the differentiating device (4) and compares the change in the control deviation with time with zero,
the apparatus being such that a first rotational speed is switched on when the control deviation is larger than a first threshold value and is either constant or is increasing;
that the first rotational speed is switched off when the control deviation is decreasing and falls below a second threshold value;
that a second rotational speed is switched on when the control deviation is larger than a third threshold value and the second rotational speed is switched off when the control deviation decreases and falls below a fourth threshold value; and
the first threshold value being set to be smaller than or equal to the second threshold value, the second threshold value being set to be smaller than or equal to the fourth threshold value and the fourth threshold value being set to be smaller than or equal to the third threshold value.

12. Control apparatus as claimed in claim 11, characterised in that an integrating device (5) for integrating the control deviation and a further comparator (16) connected after the integrating device (5) are also provided, the latter (16) comparing the integral of the control deviation over time with a predetermined value.

13. Control apparatus as claimed in claim 11 or 12, characterised in that the decision logic device (17) is constructed as a fuzzy logic device.

## Revendications

1. Procédé de régulation de la température ambiante au moyen d'un climatiseur à circulation d'air présentant au moins un ventilateur, dans lequel une température instantanée est mesurée et comparée à une température de consigne pour l'établissement d'un écart de régulation, et la vitesse de rotation du ventilateur est commutée en au moins deux échelons en fonction de cet écart de régulation,
caractérisé par le fait
qu'un premier échelon de vitesse de rotation est mis en service lorsque l'écart de régulation est supérieur à un premier seuil et soit est constant, soit croît,
que ce premier échelon de vitesse de rotation est mis hors service lorsque l'écart de régulation décroît et descend au-dessous d'un deuxième seuil,
qu'un deuxième échelon de vitesse de rotation est mis en service lorsque l'écart de régulation est supérieur à un troisième seuil et/ou lorsque, l'écart de régulation croissant ou étant constant, l'intégrale de l'écart de régulation dans le temps dépasse une valeur fixée,
que ce deuxième échelon de vitesse de rotation est mis hors service lorsque l'écart de régulation décroît et descend au-dessous d'un quatrième seuil, et
que le premier seuil de l'écart de régulation est fixé inférieur ou égal au deuxième seuil, le deuxième seuil fixé inférieur ou égal au quatrième seuil et le quatrième seuil fixé inférieur ou égal au troisième seuil.

2. Procédé selon la revendication 1, caractérisé par le fait que l'écart de régulation est déterminé, lors du chauffage, par soustraction de la température instantanée de la température de consigne et, lors de la réfrigération, par soustraction de la température de consigne de la température instantanée, et que les premier à quatrième seuils de l'écart de régulation sont fixés supérieurs ou égaux à zéro.

3. Procédé selon l'une des revendications 1 et 2, caractérisé par le fait que l'intégration de l'écart de régulation dans le temps est interrompue, remise à zéro et recommencée dès que les premier et deuxième échelons de vitesse de rotation sont mis hors service.

4. Procédé selon l'une des revendications 1 à 3, caractérisé par le fait que le premier seuil de l'écart de régulation est fixé égal à zéro.

5. Procédé selon l'une des revendications 1 à 4, caractérisé par le fait que le premier et/ou le deuxième échelon de vitesse de rotation n'est mis hors service que lorsque le ventilateur a marché pendant une durée minimale au premier et/ou au deuxième échelon.

6. Procédé selon l'une des revendications 4 et 5, caractérisé par le fait que la durée minimale est chaque fois de trois cycles.

7. Procédé selon l'une des revendications 1 à 6, caractérisé par le fait que, en service de nuit, le premier échelon de vitesse de rotation reste hors service, tandis que le deuxième échelon de vitesse de rotation est commuté dans les conditions de commutation du premier échelon de vitesse de rotation, et que, en service de nuit, les conditions de commutation du deuxième échelon de vitesse de rotation sont ignorées.

8. Procédé selon l'une des revendications 1 à 7, caractérisé par le fait que, en service de nuit, la température instantanée est diminuée ou augmentée d'une valeur constante.

9. Procédé selon l'une des revendications 1 à 8, caractérisé par le fait qu'un régulateur contenant une logique floue est utilisé pour la commutation des échelons de vitesse de rotation.

10. Procédé selon l'une des revendications 1 à 8, caractérisé par le fait que les signaux de mesure et de régulation sont traités numériquement.

11. Dispositif de régulation (100) pour la régulation de la température ambiante, comportant
un climatiseur à circulation d'air présentant au moins un ventilateur,
au moins un capteur de température (2) pour la saisie de la température instantanée,
au moins un élément de réglage d'une température de consigne (w),
un sommateur (3) pour l'établissement d'un écart de régulation (xe) entre la température instantanée et la température de consigne,
un dispositif différentiateur (4) pour la détermination de la variation dans le temps de l'écart de régulation, et
une logique de décision (17) pour la commutation de la vitesse de rotation du ventilateur,
caractérisé par le fait
que quatre dispositifs comparateurs (11 à 14) sont couplés au sommateur (3) et comparent chacun l'écart de régulation avec un de quatre seuils de celui-ci, et
qu'un cinquième dispositif comparateur (15) est couplé au dispositif différentiateur (4) et compare à zéro la variation dans le temps de l'écart de régulation,
le dispositif étant conçu de façon qu'un premier échelon de vitesse de rotation soit mis en service lorsque l'écart de régulation est supérieur à un premier seuil et soit est constant, soit croît,
que ce premier échelon de vitesse de rotation soit mis hors service lorsque l'écart de régulation décroît et descend au-dessous d'un deuxième seuil,
qu'un deuxième échelon de vitesse de rotation soit mis en service lorsque l'écart de régulation est supérieur à un troisième seuil, et
que ce deuxième échelon de vitesse de rotation soit mis hors service lorsque l'écart de régulation décroît et descend au-dessous d'un quatrième seuil,
le premier seuil étant fixé inférieur ou égal au deuxième seuil, le deuxième seuil fixé inférieur ou égal au quatrième seuil et le quatrième seuil fixé inférieur ou égal au troisième seuil.

12. Dispositif de régulation selon la revendication 11, caractérisé par le fait qu'il est en outre prévu un dispositif intégrateur (5) pour l'intégration de l'écart de régulation et un autre dispositif comparateur (16) monté après ce dispositif intégrateur (5), ce dernier (16) comparant à une valeur fixée l'intégrale de l'écart de régulation dans le temps.

13. Dispositif de régulation selon l'une des revendications 11 et 12, caractérisé par le fait que la logique de décision (17) est une logique floue.
